# FASCICULE DE BREVET EUROPEEN

(11) **EP 3 667 530 B1**
(45) Date de publication et mention de la délivrance du brevet: **21.08.2024**
(21) Numéro de dépôt: 19213701.6
(22) Date de dépôt: 04.12.2019
(51) Int. Cl.: G06F 21/44, G06F 21/60, H04L 9/40

(54) **ACCÈS SÉCURISE À DES DONNÉES CHIFFRÉES D'UN TERMINAL UTILISATEUR**
SICHERER ZUGRIFF AUF GESCHRIEBENE DATEN AUS EINEM BENUTZERKLEMMEN
SECURE ACCESS TO ENCRYPTED DATA FROM A USER TERMINAL

(30) Priorité: 12.12.2018 FR 1872779
(43) Date de publication de la demande: 17.06.2020
(73) Titulaire: IDEMIA France, 92400 Courbevoie (FR)
(72) Inventeur: HAMOUDA, Mourad, 92400 Courbevoie (FR); DUMOULIN, Jérôme, 92400 Courbevoie (FR)
(74) Mandataire: Barreau, Cédric

(56) Documents cités:
- WO-A1-2015/042548
- CA-A1- 2 940 377
- US-A1- 2008 148 063
- US-A1- 2010 153 709
- US-A1- 2014 281 489

## Description

### Domaine technique

La présente invention concerne le contexte de l'accès sécurisé à des données stockées dans des systèmes informatiques.

### Technique antérieure

La protection des données stockées dans un terminal utilisateur, typiquement un téléphone mobile, et le chiffrement intégré au système d'exploitation embarqué constituent un système puissant de sécurisation des informations.

Typiquement, le système d'exploitation est chiffré en usine à l'aide d'une clé maître propre au constructeur. Le système d'exploitation chiffre ensuite les données lors de leur utilisation. Ainsi, tous les fichiers (parfois sur une partie seulement de la mémoire du téléphone) dans le téléphone sont chiffrés à l'aide de cette clé maître, et souvent à l'aide d'un code secret supplémentaire, propre à l'utilisateur et non connu du constructeur du téléphone.

Pour diverses raisons, par exemple d'ordre judiciaire, il est important que certains tiers habilités puissent accéder à ces données chiffrées.

Il est rare que l'utilisateur divulgue son code secret personnel. Mais tester plusieurs codes secrets possibles n'est pas une solution efficace car rapidement (au bout de quelques essais), la sécurisation dans le téléphone peut conduire à effacer toutes les données stockées.

La divulgation, par le constructeur, de sa clé maître pose également certains problèmes. Par exemple, le tiers qui récupère cette clé maître est à même de pouvoir accéder aux données chiffrées stockées dans l'ensemble du parc de téléphones du constructeur.

Il existe donc un besoin d'améliorer cette situation pour permettre l'accès à des données chiffrées stockées en mémoire d'un terminal mobile. L'état de l'art comprends les documents US2008/148063 et US2014/281489 qui divulguent un système pour déchiffrer et rechiffrer des données.

### Exposé de l'invention

C'est dans ce contexte que l'invention propose un nouveau procédé d'accès à des données stockées en mémoire d'un terminal utilisateur. Les données stockées sont chiffrées à l'aide d'une clé secrète stockée dans un élément sécurisé intégré au terminal utilisateur. L'élément sécurisé réalise une authentification mutuelle avec un dispositif d'accès, l'authentification mutuelle établissant, entre l'élément sécurisé et le dispositif d'accès, un canal de communication sécurisé par une clé de session. Puis, en réponse à une requête d'accès aux données stockées dans le terminal utilisateur, l'élément sécurisé récupère, du terminal utilisateur, les données chiffrées, convertit le chiffrement des données récupérées en un chiffrement par la clé de session, puis transmet les données rechiffrées au dispositif d'accès via le canal de communication sécurisé.

Du point de vue du dispositif d'accès, l'invention concerne également un procédé d'accès à des données stockées en mémoire d'un terminal utilisateur. Les données stockées sont chiffrées à l'aide d'une clé secrète stockée dans un élément sécurisé intégré au terminal utilisateur. Le dispositif d'accès réalise une authentification mutuelle avec l'élément sécurisé, l'authentification mutuelle établissant, entre l'élément sécurisé et le dispositif d'accès, un canal de communication sécurisé par une clé de session. Puis le dispositif d'accès envoie, à l'élément sécurisé, une requête d'accès aux données stockées dans le terminal utilisateur, et, en réponse, reçoit, de l'élément sécurisé via le canal de communication sécurisé, les données non chiffrées par la clé secrète et chiffrée par la clé de session.

La mémoire stockant les données chiffrées s'entend d'une mémoire équipant le terminal utilisateur à l'exclusion de l'élément sécurisé. Ce dernier est non-amovible, de préférence soudé au terminal utilisateur afin de garantir, dans le temps, un appairage entre eux.

La présente invention permet l'accès sécurisé à des données chiffrées et stockées dans la mémoire du terminal, sans la connaissance des clés ou codes secrets les protégeant. Cela est rendu possible par l'utilisation d'un élément sécurisé réalisant une conversion de chiffrement. L'élément sécurisé opère ainsi comme une porte d'entrée à la mémoire chiffrée du terminal utilisateur.

Corrélativement, l'invention concerne un terminal utilisateur intégrant un élément sécurisé et comprenant une mémoire stockant des données chiffrées à l'aide d'une clé secrète stockée dans l'élément sécurisé. L'élément sécurisé comprend un microprocesseur configuré pour réaliser les étapes définies ci-dessus. L'invention concerne également un dispositif d'accès à un terminal utilisateur intégrant un élément sécurisé et comprenant une mémoire stockant des données chiffrées à l'aide d'une clé secrète stockée dans l'élément sécurisé. Le dispositif d'accès comprend un microprocesseur configuré pour réaliser les étapes définies ci-dessus.

Des caractéristiques optionnelles de modes de réalisation de l'invention sont définies dans les revendications dépendantes.

Dans un mode de réalisation, convertir le chiffrement des données récupérées comprend déchiffrer, à l'aide de la clé secrète stockée dans l'élément sécurisé, les données récupérées et chiffrer, à l'aide de la clé de session, les données déchiffrées avant de transmettre les données rechiffrées au dispositif d'accès via le canal de communication sécurisé. Il s'agit donc d'un rechiffrement des données. Par ce biais, il n'y a pas besoin de divulguer à l'extérieur, et notamment au dispositif d'accès, la clé secrète ou tout autre code secret utilisateur.

Dans un autre mode de réalisation, l'authentification mutuelle est conforme à la norme européenne Extended Access Control, EAC. Il s'agit d'un standard basé sur une infrastructure à clé publique (PKI) et des certificats. Ce standard est notamment défini par une documentation dédiée, incluant les directives techniques TR-03110. Advanced Security Mechanisms for Machine Readable Travel Documents - Extended Access Control (EAC) (en version 2). Il est ci-dessous notamment fait référence à la partie 1 (Part 1) dans sa version 2.20.

Dans un mode de réalisation, le dispositif d'accès est externe au terminal utilisateur.

En variante, le dispositif d'accès forme sous-partie du terminal utilisateur. Dans ce cas, cette sous-partie du terminal et l'élément sécurisé réalisent une authentification mutuelle, permettant à cette sous-partie (par exemple un contrôleur de mémoire éventuellement amovible, d'écran, etc.) d'obtenir les données rechiffrées pour permettre leur utilisation (par exemple copie sur carte amovible prévue dans le terminal ou affichage sur un écran des données une fois déchiffrées).

Dans encore un autre mode de réalisation, la clé secrète est obtenue par diversification d'une clé maître à l'aide d'un identifiant unique du terminal utilisateur, par exemple l'IMEI (pour « International Mobile Equipment Identity » ou identité internationale d'équipement mobile). Cette disposition permet d'individualiser le chiffrement au niveau de chaque paire formée d'un terminal et d'un élément sécurisé intégré.

Selon une caractéristique additionnelle, déchiffrer est en outre basé sur un code secret d'utilisateur, typiquement un code PIN.

Dans un mode de réalisation, la mémoire (il peut s'agir d'une partie de toute la mémoire, par exemple une partition) du terminal utilisateur est chiffrée par la clé secrète. Cette disposition reflète un type de sécurisation global de la mémoire des terminaux utilisateurs.

Dans un mode de réalisation se rapportant au dispositif d'accès, le procédé peut comprendre en outre le déchiffrement des données reçues, à l'aide de la clé de session. En outre, la méthode peut alors comprendre l'affichage, sur le dispositif d'accès, des données ainsi déchiffrées.

L'invention concerne également un produit programme d'ordinateur comprenant des instructions configurées pour une mise en oeuvre des étapes de l'un des procédés ci-dessus lorsque ledit programme est exécuté sur un ordinateur, ainsi qu'un support tangible comprenant un tel produit programme d'ordinateur.

### Brève description des dessins

D'autres particularités et avantages de l'invention apparaîtront encore dans la description ci-après, illustrée par les figures ci-jointes qui en illustrent des exemples de réalisation dépourvus de tout caractère limitatif.
[Fig. 1] La **Figure 1** illustre, de façon schématique, un système pour une mise en oeuvre de l'invention.
[Fig. 2A] La **Figure 2A** illustre, à l'aide d'un organigramme, des étapes d'une mise en oeuvre de l'invention basée sur l'utilisation de la norme EAC, au niveau du dispositif d'accès de la **Figure 1****.**
[Fig. 2B] La **Figure 2B** illustre, à l'aide d'un organigramme, des étapes d'une mise en oeuvre de l'invention basée sur l'utilisation de la norme EAC, au niveau de l'élément sécurisé de la **Figure 1****.**

### Description détaillée

Pour permettre l'accès à des données chiffrées stockées en mémoire d'un terminal utilisateur, la clé secrète de chiffrement correspondante est stockée dans un élément sécurisé intégré au terminal utilisateur et cet élément sécurisé sert de relais hautement sécurisé vers un dispositif d'accès à ces données utilisé par un tiers. Pour ce faire, un canal de communication sécurisé est établi entre le tiers et l'élément sécurisé. L'élément sécurisé réalise une conversion de chiffrement des données pour que celles-ci soient protégées par une clé de session (ou de transport) associée au canal de communication sécurisé, et non plus par la clé secrète initiale. Le tiers peut ainsi accéder aux données chiffrées sans même connaître la clé secrète initiale.

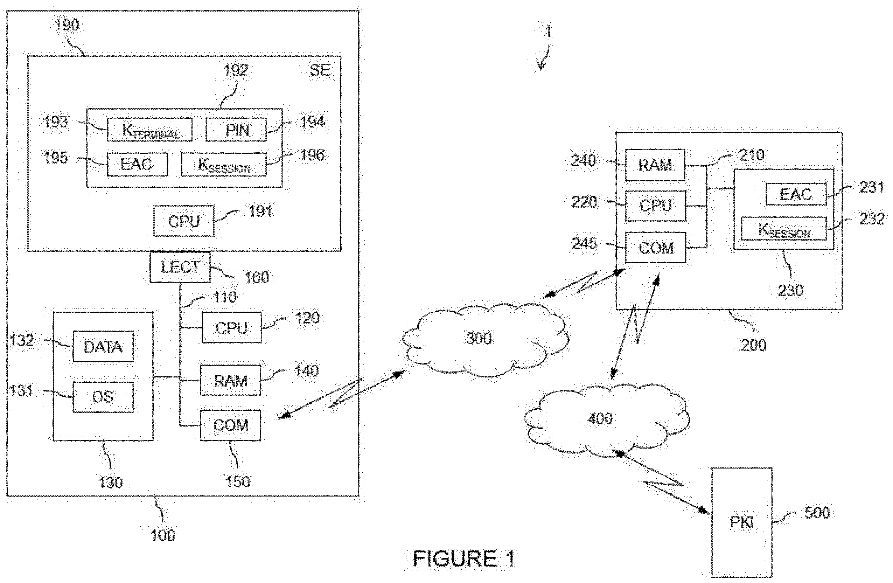

La **Figure 1** illustre, de façon schématique, un système 1 pour une mise en oeuvre de l'invention, dans lequel un terminal utilisateur 100 est relié à un dispositif d'accès 200 au travers d'une connexion 300. Le dispositif d'accès 200 est en outre relié, via un réseau 400 qui peut être similaire à 300, à des équipements 500 d'une infrastructure à clé publique PKI. Bien qu'un seul terminal utilisateur 100 ne soit représenté, l'invention s'applique également à une flotte de terminaux utilisateurs, chacun étant accédé séparément comme exposé ci-dessous.

Le terminal utilisateur 100 peut comprendre ou être mise en oeuvre par un téléphone (par exemple, un téléphone cellulaire ou un téléphone intelligent), un ordinateur (par exemple, un ordinateur portable), une tablette, un appareil de communication portable, un appareil informatique portable (par exemple, un assistant de données personnelles), un appareil de divertissement (par exemple, un appareil de musique ou vidéo, ou une radio satellite), un système de positionnement global (GPS), ou tout autre appareil approprié qui est configuré pour communiquer via un support sans fil ou câblé de connexion 300 avec le dispositif d'accès 200.

Il comporte un bus de communication 110 auquel sont reliés :
- une unité de traitement 120 -ou microprocesseur- notée CPU (sigle de *Central Processing Unit* en terminologie anglo-saxonne) ;
- une ou plusieurs mémoires non volatiles 130 par exemple ROM (acronyme de *Read Only Memory* en terminologie anglo-saxonne), Flash, EEPROM (acronyme de *Electrically Erasable Read Only Memoryen* terminologie anglo-saxonne) ou tout type de disque dur;
- une mémoire vive 140 ou mémoire cache ou mémoire volatile par exemple RAM (acronyme de *tandem Access Memory* en terminologie anglo-saxonne) comprenant des registres adaptés à l'enregistrement de variables et paramètres pendant le fonctionnement du terminal ; lors de la mise en oeuvre de l'invention, les codes d'instructions de programme stockés en mémoire morte non-volatiles sont chargés en mémoire RAM en vue d'être exécutés par l'unité de traitement CPU ;
- une ou plusieurs interfaces de communication 150 adaptées à transmettre et à recevoir des données via des connexions (300), par exemple via un réseau de télécommunications ;
- une interface d'entrées/sorties I/O (pour *Input*/*Output* en terminologie anglo-saxonne) classique pour un terminal utilisateur. Cette interface est non représentée et peut comprendre par exemple un écran, un clavier, une souris ou un autre dispositif de pointage tel qu'un écran tactile ou une télécommande ; - un lecteur 160 d'élément sécurisé.

Le bus de communication permet la communication et l'interopérabilité entre les différents éléments inclus dans l'équipement ou reliés à lui. La représentation du bus n'est pas limitative et, notamment, l'unité de traitement est susceptible de communiquer des instructions à tout élément de l'équipement directement ou par l'intermédiaire d'un autre élément de cet équipement.

Le terminal utilisateur 100 comporte également un élément sécurisé 190 connecté au lecteur 160. De préférence, l'élément sécurisé 190 est fixé de façon non amovible au terminal utilisateur 100.

Un élément sécurisé, SE, est un composant ou plate-forme matérielle inviolable (typiquement une puce ou une carte à puce) utilisée dans le terminal dit « hôte » et capable d'héberger, de façon sûre, des applications et des données en conformité avec des règles et des exigences de sécurité fixées par des autorités de confiance. Il comporte un microprocesseur propre 191 ainsi que une ou plusieurs mémoires 192 pouvant comprendre un programme informatique comprenant des instructions pour la mise en oeuvre d'un procédé selon différents modes de réalisation de l'invention. Les codes d'instructions du programme sont chargés en mémoire RAM (non représentée) de l'élément sécurisé en vue d'être exécutés par le microprocesseur 191.

Un facteur de forme de plus en plus utilisé du SE est l'élément sécurisé embarqué, eSE (pour « embedded Secure Element »). Cet élément sécurisé embarqué est soudé au terminal hôte 100 lors de la fabrication de ce dernier.

L'élément sécurisé 190 communique avec le terminal hôte 100 (via le lecteur 160) à l'aide de commandes de type APDU, conformes par exemple à la norme ISO/IEC 7816, éventuellement encapsulées dans des trames gérées par des APIs (*application programming interface* ou interface de programmation applicative) interfaçant l'élément sécurisé 190 au terminal utilisateur 100. D'autres protocoles que ISO/IEC 7816 peuvent être utilisés, par exemple SWP (pour « Single Wire Protocol » ou protocole simple fil), HCl (pour « Host Controller Interface » ou interface de contrôleur hôte), SPI (pour « Serial Peripheral Interface » ou interface périphérique série), I²C (pour « Inter-Integrated Circuit »).

Un système d'exploitation 131 du terminal 100, et des données d'utilisation 132, sont stockés en mémoire 130 sous forme chiffrée dès l'usine. Le chiffrement est réalisé selon des techniques classiques, typiquement en utilisant l'algorithme AES (Advanced Encryption Standard soit « standard de chiffrement avancé ») à l'aide d'une clé secrète K_{TERMINAL} 193, et optionnellement en utilisant également un code secret de l'utilisateur 194 (code PIN, code dérivé de données biométriques). La clé K_{TERMINAL} est stockée de façon sécurisée dans l'élément sécurisé 190. Avantageusement, la clé K_{TERMINAL} a été générée par diversification d'une clé maître (propre au fabriquant du terminal) à l'aide d'un identifiant unique du terminal utilisateur (par exemple un numéro de série ou l'IMEI dans le cas d'un téléphone). Le fabriquant peut ainsi individualiser, à faible coût, la clé K_{TERMINAL} dans chaque terminal utilisateur d'une flotte qu'il a mis en place.

Lorsque le terminal 100 est utilisé par un utilisateur, ce dernier peut s'authentifier sur le terminal à l'aide d'un code personnel, typiquement un code PIN, ou tout autre moyen d'authentification, ce qui provoque le déchiffrement du système d'exploitation 131 et des données 132 pour un fonctionnement normal. Toute nouvelle donnée générée et mémorisée en mémoire 131 est automatiquement chiffrée par l'algorithme AES à l'aide de la clé K_{TERMINAL} 193.

Le dispositif d'accès 200 peut être tout type d'équipement configuré pour communiquer via un support sans fil ou câblé de connexion 300 avec le terminal utilisateur 100. Le support sans fil ou câblé 300 peut être tout type de réseau de télécommunication (Wifi, WLAN, Internet, mobile tel que 2G, 3G, 4G, 5G) ou encore tout type de moyen de communication locale, type Infrarouge, NFC (Near Field Communication), Bluetooth, USB, etc.

De façon classique et semblable au terminal 100, le dispositif d'accès 200 comporte un bus de communication 210 auquel sont reliés une unité de traitement 220, une ou plusieurs mémoires non volatiles 230, une mémoire vive 240, une ou plusieurs interfaces de communication 245 pour communiquer via la connexion 300 et/ou le réseau 400, et une interface d'entrées/sorties I/O (non représentée). Tout ou partie des mémoires peut être mise en oeuvre à l'aide d'un élément sécurisé, notamment pour stocker des données secrètes, tels que des clés cryptographiques, des certificats comme discuté par la suite.

Dans un mode de réalisation, le dispositif d'accès 200 peut être le terminal 100 qui présente une structure similaire. Dans ce cas, une sous-partie du terminal 100 (sous-partie n'incluant pas la mémoire 130 chiffrée) opère comme dispositif d'accès, et la connexion 300 peut être tout type de bus ou moyen de communication interne au terminal 100. Par exemple, une application gérant un périphérique (une mémoire, une carte SD, un écran par exemple) peut être amené à établir une connexion avec l'élément sécurisé pour récupérer, selon les enseignements de l'invention, les données initialement chiffrées à l'aide de la clé K_{TERMINAL} 193. La suite de la description évoque un « dispositif d'accès 200 » qui peut donc être mis en oeuvre au sein du terminal 100.

Les mémoires 230 comprennent un programme informatique comprenant des instructions pour la mise en oeuvre d'un procédé selon différents modes de réalisation de l'invention. Les codes d'instructions du programme sont chargés en mémoire RAM 240 en vue d'être exécutés par le microprocesseur 220.

Un module 231 d'authentification mutuelle conforme à la norme Extended Access Control, EAC, est stocké en mémoire 230. Comme décrit par la suite, il permet de réaliser une authentification mutuelle avec l'élément sécurisé 190, en établissant, entre l'élément sécurisé 190 et le dispositif d'accès 200 (via la communication 300), un canal de communication sécurisé par une clé de session. De façon symétrique, un module EAC correspondant 195 est stocké en mémoire 192 de l'élément sécurisé 190.

La norme EAC, définie par l'ICAO (*International Civil Aviation Organization*), est classiquement utilisée dans le contexte des passeports électronique. Elle garantit que des données sensibles ne sont accessibles, via un canal sécurisé, que par un tiers autorisé. Elle s'appuie sur une infrastructure à clé publique, PKI, 500 auquel le dispositif d'accès 200 peut accéder via un réseau de communication 400 (type WLAN, Internet, réseau mobile, etc.). Elle est définie dans des directives techniques « *TR-03110* - *Advanced Security Mechanisms for Machine Readable Travel Documents* - *Extended Access Control (EAC)* » (parties 1 à 4).

Comme décrit dans la partie 1 (dans sa version 2.20), l'authentification mutuelle EAC comporte une authentification de puce (Chip Authentication) et une authentification de terminal (Terminal Authentication).

Le protocole d'authentification de la puce, ici de l'élément sécurisé 190, est un protocole d'accord éphémère et statique par échange de clés Diffie-Hellman qui assure une communication sécurisée et l'authentification unilatérale de l'élément sécurisé 190 par le terminal (ici le dispositif d'accès 200). La puce et le terminal calculent un secret commun duquel ils dérivent des clés de sessions, notées ici K_{SESSION} 196/232, pour protéger la communication sécurisée entre eux. En pratique, la puce envoie, au terminal, sa clé publique Diffie-Hellman statique et des paramètres de domaine. Le terminal génère une paire de clés éphémère Diffie-Hellman et envoie, à la puce, la clé publique éphémère générée. La puce et le terminal calculent alors le secret partagé, les clés de session dérivées du secret commun, et la clé publique éphémère comprimée du terminal pour l'authentification du terminal.

Le protocole d'authentification de terminal, ici le dispositif d'accès 200, est un protocole de défi-réponse qui fournit une authentification unilatérale explicite du terminal. Il permet à la puce (ici de l'élément sécurisé 190) de vérifier que le terminal est autorisé à accéder aux données sensibles du passeport électronique. En pratique, le terminal envoie une chaîne de certificats (délivrés par une autorité tierce de confiance et indépendante) à la puce, la chaîne commençant par un certificat vérifiable avec une clé publique de l'autorité tierce, stockée sur la puce, et se termine par le certificat de terminal. La puce vérifie les certificats et en extrait la clé publique du terminal. La puce choisit au hasard un challenge et l'envoie au terminal, lequel répond avec une signature basée sur le challenge, sa clé privée ainsi que la clé publique éphémère comprimée. La puce vérifie alors la signature à l'aide de la clé publique du terminal.

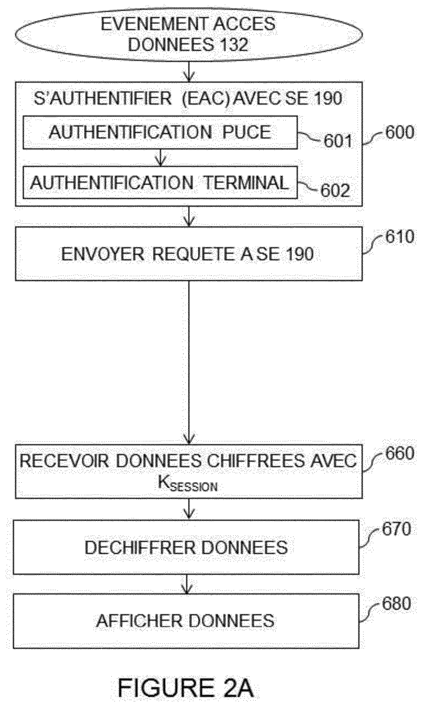

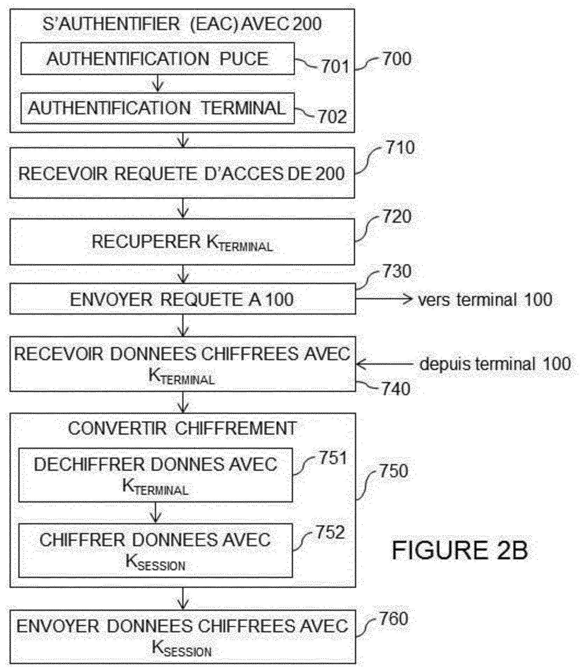

Les **Figures 2A** et **2B** illustrent, à l'aide d'organigrammes, des étapes d'une mise en oeuvre de l'invention basée notamment sur l'utilisation de la norme EAC précitée. La **Figure 2A** illustre des opérations du côté du dispositif d'accès 200, alors que la **Figure 2B** illustre des opérations du côté de l'élément sécurisé 100. Bien entendu, l'invention s'applique également lorsque d'autres protocoles d'authentification mutuelle établissant une session sécurisée sont utilisés.

Lorsque ces opérations sont mises en oeuvre, le terminal 100 est en utilisation. Son système d'exploitation 131 et ses données 132 en mémoire 130 sont chiffrées par la clé secrète K_{TERMINAL} 193 et optionnellement par le code secret d'utilisateur 194. Les opérations des Figures permettent d'accéder à ces données chiffrées stockées en mémoire du terminal utilisateur, sans connaissance de la clé secrète et du code secret utilisés pour le chiffrement.

Aux étapes 600 (côté dispositif d'accès 200) et 700 (côté élément sécurisé 190), le dispositif d'accès 200 et l'élément sécurisé 190 réalisent une authentification mutuelle avec établissement d'un canal de communication (sur le lien 300) sécurisé par une clé de session K_{SESSION}. Ces étapes sont initiées par le dispositif d'accès 200 lorsqu'un opérateur déclenche une action d'accès aux mémoires du terminal 100.

Ces étapes sont réalisées par les modules EAC 231 et 195. Elles comportent une étape d'authentification de puce 601/701 pour authentifier l'élément sécurisé 190 et une étape d'authentification de terminal 602/702 pour vérifier, à l'aide de certificats, que le dispositif d'accès 200 est autorisé par l'autorité tierce à accéder aux mémoires du terminal utilisateur 100. L'étape d'authentification de puce 601/701 permet la génération de clés de session K_{SESSION} 232/196 stockées en mémoire respectivement du dispositif d'accès 200 et de l'élément sécurisé 190. Ces clés de session sécurisent un canal de communication entre le dispositif d'accès 200 et l'élément sécurisé 190.

Le terminal utilisateur 100 intervient comme relais dans le canal de communication sécurisé entre l'élément sécurisé 192 et le dispositif d'accès 200 externe au terminal 100 (puisqu'il détient les interfaces de communication 150 avec l'extérieur) ou comme relais entre l'élément sécurisé 192 et le dispositif d'accès 200 formant sous-partie du terminal 100 (puisqu'il contrôle les bus ou communications internes à lui-même). Pour autant, n'ayant pas accès aux clés de session, le terminal utilisateur 100 est incapable de lire et exploiter les données qui transitent par le canal sécurisé.

En cas d'authentification mutuelle réussie, une requête d'accès à des données chiffrées stockées en mémoire 130 du terminal utilisateur 100 est envoyée par le dispositif d'accès 200 à l'élément sécurisé 190 lors de l'étape 610. Cet envoi est réalisé dans le canal de communication sécurisé par les clés K_{SESSION}, signifiant que la requête est chiffrée à l'aide de ces clés.

La requête peut être de type commande ADPU encapsulée dans des trames d'autres protocoles de communication.

La requête peut identifier une donnée particulière à récupérer, notamment si les données chiffrées sont indexées en mémoire du terminal utilisateur 100.

En variante, la requête peut indiquer tout ou partie de mémoire à récupérer. Une partie de mémoire peut consister à indiquer une adresse, une plage d'adresses (par exemple logiques) mémoire, une page ou une partition ou un ou plusieurs fichiers (record ou binary, au sens de système de fichiers).

Par exemple, la requête est une commande ISO/IEC 7816-part 4 « read binary », « read memory » avec les paramètres (de fichier, ou d'adresse mémoire) idoines.

A l'étape 710, l'élément sécurisé 190 reçoit la requête chiffrée, la déchiffre à l'aide de K_{SESSION} 196 et lance son exécution.

Cette dernière comprend à l'étape 720, la récupération de la clé secrète de chiffrement K_{TERMINAL} 193, et éventuellement du code secret d'utilisateur 194, par l'élément sécurisé 190 depuis sa mémoire 192.

En parallèle, avant ou après l'étape 720, l'élément sécurisé 190 envoie, au terminal utilisateur 100, une requête d'obtention des données visées dans la requête reçue à l'étape 710. C'est l'étape 730. La requête peut être au format commande APDU et envoyée au système d'exploitation du terminal 100 via le lecteur 160.

Cette requête est traitée de façon classique par le terminal utilisateur 100 qui renvoie en retour les données demandées.

Dans un premier mode de réalisation, les données retournées sont les données chiffrées 132, auquel cas le déchiffrage est réalisé par l'élément sécurisé 192.

Dans un deuxième mode de réalisation en variante, les données retournées sont des données déchiffrées. Dans ce cas, le système d'exploitation 131 du téléphone peut par exemple réaliser le déchiffrage des données 132 à réception de la requête 730 du SE 192 et renvoyer les données déchiffrées. Dans ce mode de réalisation, l'élément sécurisé fait ses demandes à un agent (application) situé en mémoire du terminal 100 en charge de recevoir les demandes en provenance de l'élément sécurisé 192 après une phase préalable d'authentification entre l'élément sécurisé et l'agent. La clé K_{TERMINAL} de chiffrement 193 et l'éventuel code utilisateur 194 peuvent alors être fournis par l'élément sécurisé au terminal si besoin est.

Ainsi, en réponse à la requête d'accès, l'élément sécurisé 190 récupère, du terminal utilisateur 100, les données, chiffrées ou non selon le mode de réalisation, via le lecteur 160. C'est l'étape 740.

Il s'ensuit une étape 750 où l'élément sécurisé 190 disposant de la clé de (dé)chiffrement K_{TERMINAL} 193, du code secret optionnel 194 et de la clé de session K_{SESSION} 196 convertit le chiffrement des données récupérées 132 en un chiffrement par la clé de session. Il s'agit d'un rechiffrement des données.

Cette étape comporte par exemple un déchiffrement 751, à l'aide de la clé secrète K_{TERMINAL} 193 et du code secret optionnel 194, des données récupérées 132 (dans l'exemple en utilisant l'algorithme AES) puis un chiffrement 752, à l'aide de la clé de session K_{SESSION} 196, des données ainsi déchiffrées. L'étape 751 n'est pas réalisée par l'élément sécurisé dans le deuxième mode de réalisation où il reçoit, du terminal 100, les données déjà déchiffrées.

L'élément sécurisé 190 peut ainsi transmettre les données rechiffrées au dispositif d'accès 200 via le canal de communication sécurisé. C'est l'étape 760.

Le dispositif d'accès 200 reçoit ainsi à l'étape 660, de l'élément sécurisé 190 via le canal de communication sécurisé, les données 132 non chiffrées par la clé secrète K_{TERMINAL} (et optionnellement par le code secret d'utilisateur 194) mais chiffrée par la clé de session K_{SESSION}.

Ces données récupérées sans connaître K_{TERMINAL} 193 (et optionnellement le code secret d'utilisateur 194) peuvent ainsi être exploitées par l'opérateur utilisant le dispositif d'accès 200. Par exemple, ces données récupérées peuvent être déchiffrées à l'aide de la clé de session K_{SESSION} à l'étape 670, puis affichées sur un écran d'affichage ou sauvegardées en mémoire (par exemple amovible) lors de l'étape 680.

Par exemple, dans le deuxième mode de réalisation où le dispositif d'accès forme sous-partie du terminal 100, les données ainsi récupérées et déchiffrées peuvent être affichées sur l'écran du terminal ou sauvegardées dans une mémoire amovible (type carte mémoire).

Grâce à ces modes de réalisation, l'opérateur qui ne connaît pas la clé secrète K_{TERMINAL} (et optionnellement pas le code secret d'utilisateur 194) accède de façon sécurisée, s'il en est autorisé, aux données chiffrées d'un terminal utilisateur, sans compromettre les données chiffrées d'autres terminaux d'une même flotte (du même constructeur).

Les exemples qui précèdent ne sont que des modes de réalisation de l'invention qui ne s'y limite pas.

## Revendications

1. Procédé d'accès à des données (132) stockées en mémoire (130) d'un terminal utilisateur (100), les données stockées étant chiffrées à l'aide d'une clé secrète (K_{TERMINAL}, 193) stockée dans un élément sécurisé (190) intégré au terminal utilisateur, dans lequel la clé secrète est obtenue par diversification d'une clé maître à l'aide d'un identifiant unique du terminal utilisateur, le procédé comprenant les étapes suivantes, dans l'élément sécurisé (190) :
- réaliser (700) une authentification mutuelle avec un dispositif d'accès (200), l'authentification mutuelle établissant, entre l'élément sécurisé et le dispositif d'accès, un canal de communication sécurisé par une clé de session (K_{SESSION}, 196, 232), et
- en réponse à une requête (710) d'accès aux données stockées dans le terminal utilisateur :
récupérer (740), du terminal utilisateur, les données chiffrées,
convertir (750) le chiffrement des données récupérées en un chiffrement par la clé de session, puis
transmettre (760) les données rechiffrées au dispositif d'accès via le canal de communication sécurisé.

2. Procédé selon la revendication 1, dans lequel convertir (750) le chiffrement des données récupérées comprend déchiffrer (751), à l'aide de la clé secrète stockée dans l'élément sécurisé, les données récupérées et chiffrer (752), à l'aide de la clé de session, les données déchiffrées avant de transmettre les données rechiffrées au dispositif d'accès via le canal de communication sécurisé.

3. Procédé selon la revendication 1, dans lequel l'authentification mutuelle est conforme à la norme européenne Extended Access Control, EAC.

4. Procédé selon la revendication 1, dans lequel le dispositif d'accès (200) est externe au terminal utilisateur (100).

5. Procédé selon la revendication 1, dans lequel le dispositif d'accès (200) forme sous-partie du terminal utilisateur (100).

6. Procédé selon la revendication 2, dans lequel déchiffrer (751) est en outre basé sur un code secret d'utilisateur (194).

7. Procédé selon la revendication 1, dans lequel la mémoire (130) du terminal utilisateur (100) est chiffrée par la clé secrète (K_{TERMINAL}, 193).

8. Produit programme d'ordinateur comprenant des instructions configurées pour mettre en oeuvre le procédé selon la revendication 1 lorsque ledit programme est exécuté sur un ordinateur.

9. Terminal utilisateur (100) intégrant un élément sécurisé (190) et comprenant une mémoire (130) stockant des données (132) chiffrées à l'aide d'une clé secrète (K_{TERMINAL}, 193) stockée dans l'élément sécurisé, dans lequel la clé secrète est obtenue par diversification d'une clé maître à l'aide d'un identifiant unique du terminal utilisateur, l'élément sécurisé comprenant un microprocesseur (191) configuré pour réaliser les étapes suivantes :
- réaliser une authentification mutuelle avec un dispositif d'accès (200), l'authentification mutuelle établissant, entre l'élément sécurisé et le dispositif d'accès, un canal de communication sécurisé par une clé de session (K_{SESSION}, 196, 232), et
- en réponse à une requête d'accès aux données stockées dans le terminal utilisateur :
récupérer, du terminal utilisateur, les données chiffrées,
convertir le chiffrement des données récupérées en un chiffrement par la clé de session, puis
transmettre les données rechiffrées au dispositif d'accès via le canal de communication sécurisé.

## Patentansprüche

1. Verfahren zum Zugriff auf Daten (132), die im Speicher (130) eines Benutzerendgeräts (100) gespeichert sind, wobei die gespeicherten Daten mithilfe eines Geheimschlüssels (K_{TERMINAL}, 193) verschlüsselt sind, der in einem sicheren Element (190) gespeichert ist , das im Benutzerendgerät integriert ist, wobei der Geheimschlüssel durch Diversifizierung eines Master-Schlüssels mithilfe einer eindeutigen Kennung des Benutzerendgeräts erhalten wird, wobei das Verfahren die folgenden Schritte in dem sicheren Element (190) umfasst:
- Durchführen (700) einer gegenseitigen Authentifizierung mit einer Zugriffsvorrichtung (200), wobei die gegenseitige Authentifizierung zwischen dem sicheren Element und der Zugriffsvorrichtung einen Kommunikationskanal herstellt, der durch einen Sitzungsschlüssel (K_{SESSION}, 196, 232) gesichert ist, und
- in Reaktion auf eine Anfrage (710) zum Zugriff auf die Daten, die in dem Benutzerendgerät gespeichert sind:
Abrufen (740), vom Benutzerendgerät, der verschlüsselten Daten,
Umwandeln (750) der Verschlüsselung der abgerufenen Daten in eine Verschlüsselung durch den Sitzungsschlüssel, dann Übertragen (760) der wieder verschlüsselten Daten an die Zugriffsvorrichtung über den gesicherten Kommunikationskanal.

2. Verfahren nach Anspruch 1, wobei Umwandeln (750) der Verschlüsselung der abgerufenen Daten Entschlüsseln (751), mithilfe des Geheimschlüssels, der im sicheren Element gespeichert ist, der abgerufenen Daten und Verschlüsseln (752), mithilfe des Sitzungsschlüssels, der entschlüsselten Daten, bevor die wieder verschlüsselten Daten über den gesicherten Kommunikationskanal übertragen werden, umfasst.

3. Verfahren nach Anspruch 1, wobei die gegenseitige Authentifizierung der europäischen Norm Extended Access Control, EAC, entspricht.

4. Verfahren nach Anspruch 1, wobei sich die Zugriffsvorrichtung (200) außerhalb des Benutzerendgeräts (100) befindet.

5. Verfahren nach Anspruch 1, wobei die Zugriffsvorrichtung (200) einen Unterabschnitt des Benutzerendgeräts (100) bildet.

6. Verfahren nach Anspruch 2, wobei Entschlüsseln (751) ferner auf einem Benutzer-Geheimcode (194) basiert.

7. Verfahren nach Anspruch 1, wobei der Speicher (130) des Benutzerendgeräts (100) durch den Geheimschlüssel K_{TERMINAL}, 193) verschlüsselt ist.

8. Computerprogrammprodukt umfassend Anweisungen, die dazu ausgebildet sind, das Verfahren nach Anspruch 1 durchzuführen, wenn das Programm auf einem Computer ausgeführt wird.

9. Benutzerendgerät (100), das ein sicheres Element (190) enthält und einen Speicher (130) umfasst, der Daten (132) speichert, die mithilfe eines Geheimschlüssels (K_{TERMINAL}, 193) verschlüsselt sind, der in dem sicheren Element gespeichert ist, wobei der Geheimschlüssel durch Diversifizierung eines Master-Schlüssels mithilfe einer eindeutigen Kennung des Benutzerendgeräts erhalten wird, wobei das sichere Element einen Mikroprozessor (191) umfasst, der dazu ausgebildet ist, die folgenden Schritte durchzuführen:
- Durchführen einer gegenseitigen Authentifizierung mit einer Zugriffsvorrichtung (200), wobei die gegenseitige Authentifizierung zwischen dem sicheren Element und der Zugriffsvorrichtung einen Kommunikationskanal herstellt, der durch einen Sitzungsschlüssel (K_{SESSION}, 196, 232) gesichert ist, und
- in Reaktion auf eine Anfrage zum Zugriff auf die Daten, die in dem Benutzerendgerät gespeichert sind:
Abrufen, vom Benutzerendgerät, der verschlüsselten Daten,
Umwandeln der Verschlüsselung der abgerufenen Daten in eine Verschlüsselung durch den Sitzungsschlüssel, dann Übertragen der wieder verschlüsselten Daten an die Zugriffsvorrichtung über den gesicherten Kommunikationskanal.

## Claims

1. Method for accessing data (132) stored in the memory (130) of a user terminal (100), the stored data being encrypted using a secret key (K_{TERMINAL}, 193) stored in a secure element (190) incorporated into the user terminal, wherein the secret key is obtained by diversifying a master key using a unique identifier of the user terminal, the method comprising the following steps, in the secure element (190):
- performing (700) a mutual authentication with an access device (200), the mutual authentication establishing, between the secure element and the access device, a communication channel secured by a session key (K_{SESSION}, 196, 232), and
- in response to a request (710) for access to the data stored in the user terminal:
retrieving (740) the encrypted data from the user terminal,
converting (750) the encryption of the retrieved data into an encryption by the session key, then transmitting (760) the re-encrypted data to the access device via the secure communication channel.

2. Method according to Claim 1, wherein converting (750) the encryption of the retrieved data comprises decrypting (751) the retrieved data using the secret key stored in the secure element and encrypting (752) the decrypted data using the session key before transmitting the re-encrypted data to the access device via the secure communication channel.

3. Method according to Claim 1, wherein the mutual authentication is in accordance with the Extended Access Control, EAC, European standard.

4. Method according to Claim 1, wherein the access device (200) is external to the user terminal (100).

5. Method according to Claim 1, wherein the access device (200) forms a sub-part of the user terminal (100).

6. Method according to Claim 2, wherein decrypting (751) is further based on a user secret code (194).

7. Method according to Claim 1, wherein the memory (130) of the user terminal (100) is encrypted by the secret key (K_{TERMINAL}, 193) .

8. Computer program product comprising instructions which are configured to implement the method according to Claim 1 when said program is executed on a computer.

9. User terminal (100) incorporating a secure element (190) and comprising a memory (130) storing data (132) encrypted using a secret key (K_{TERMINAL}, 193) stored in the secure element, wherein the secret key is obtained by diversifying a master key using a unique identifier of the user terminal, the secure element comprising a microprocessor (191) configured to perform the following steps:
- performing a mutual authentication with an access device (200), the mutual authentication establishing, between the secure element and the access device, a communication channel secured by a session key (K_{SESSION}, 196), and
- in response to a request for access to the data stored in the user terminal:
retrieving the encrypted data from the user terminal,
converting the encryption of the retrieved data into an encryption by the session key, then
transmitting the re-encrypted data to the access device via the secure communication channel.
